# EUROPÄISCHE PATENTSCHRIFT

(11) **EP 2 692 200 B1**
(45) Veröffentlichungstag und Bekanntmachung des Hinweises auf die Patenterteilung: **06.09.2017**
(21) Anmeldenummer: 12711967.5
(22) Anmeldetag: 09.03.2012
(51) Int. Cl.: H05B 3/74, C03C 17/36, C03C 23/00, F24C 15/10

(54) **KOCHFELDPLATTE MIT EINER AN DER UNTERSEITE ANGEBRACHTEN BESCHICHTUNG**
HOT PLATE COMPRISING A COATING APPLIED TO THE LOWER SIDE THEREOF
TABLE DE CUISSON PRÉSENTANT UN REVÊTEMENT APPLIQUÉ SUR SA FACE INFÉRIEURE

(30) Priorität: 30.03.2011 ES 201130484 P
(43) Veröffentlichungstag der Anmeldung: 05.02.2014
(73) Patentinhaber: BSH Hausgeräte GmbH, 81739 München (DE)
(72) Erfinder: ALONSO ESTEBAN, Rafael, 22004 Huesca (ES); BUÑUEL MAGDALENA, Miguel Angel, 50017 Zaragoza (ES); CARRETERO CHAMARRO, Enrique, 50003 Zaragoza (ES); ESTER SOLA, Francisco Javier, 50001 Zaragoza (ES); PELAYO ZUECO, Francisco Javier, 50008 Zaragoza (ES); PÉREZ CABEZA, Pilar, 50008 Zaragoza (ES); PLANAS LAYUNTA, Fernando, 50009 Zaragoza (ES); SUBIAS DOMINGO, Jesus Mario, 50008 Zaragoza (ES); VILLUENDAS YUSTE, Francisco, 50009 Zaragoza (ES)
(86) Internationale Anmeldenummer: PCT/IB2012/051123
(87) Internationale Veröffentlichungsnummer: WO 2012/131511

(56) Entgegenhaltungen:
- US-A1- 2003 087 106
- US-A1- 2005 252 503
- US-B2- 7 718 929

## Beschreibung

Die Erfindung betrifft eine Kochfeldplatte, an deren Unterseite eine Beschichtung mit metallischen Schichten und dielektrischen Schichten ausgebildet ist.

Derartige Ausgestaltungen von Kochfeldplatten sind in unterschiedlichsten Ausführungen bekannt. Aus der US 7,718,929 B2 ist eine derartige Ausgestaltung bekannt. Dort ist die Beschichtung jedoch darauf beschränkt, dass die Anzahl der Schichten umfassend eine Antioxidations-Schutzschicht und eine Lichtabschirmschicht zwischen 2 und 4 beträgt. Bei derartigen Ausgestaltungen ist die Erzeugung von optischen Effekten betreffend den optischen Gesamteindruck der Kochfeldplatte eingeschränkt.

Es ist Aufgabe der vorliegenden Erfindung, eine Kochfeldplatte zu schaffen, an deren Unterseite eine Beschichtung mit einer Mehrzahl von Schichten ausgebildet ist und dadurch eine vielfältigere Möglichkeit der optischen Effekte bezüglich der Farbdarstellung der Kochfeldplatte ermöglicht ist.

Diese Aufgabe wird durch eine Kochfeldplatte, welche die Merkmale nach Anspruch 1 aufweist, gelöst.

Eine erfindungsgemäße Kochfeldplatte weist eine Grundplatte auf, die eine Beschichtung an ihrer Unterseite aufweist. Die Beschichtung umfasst metallische Schichten und dielektrische Schichten. Die Beschichtung ist zumindest mit zwei metallischen Schichten und zumindest zwei dielektrischen Schichten ausgebildet. Darüber hinaus ist die Beschichtung mittels dieser Anzahl und den spezifischen Schichten so ausgebildet, dass ein erster Farbparameter a* oder ein zweiter Farbparameter b* an der Kochfeldplatte einen Wert >+10 oder <-10 aufweist.

Es ist die Beschichtung so ausgebildet, dass der dritte Farbparameter L* einen Wert >40, insbesondere zwischen 40 und 70 aufweist. Dadurch lässt sich die Variabilität im Hinblick auf die unterschiedlichsten optischen Erscheinungen der Kochfeldplatte deutlich erweitern. Gerade in Verbindung mit der größeren Anzahl an Schichten der Beschichtung lässt sich somit diese angesprochene Möglichkeit noch erweitern.

Die beiden Farbparameter a* und b* bilden zusammen mit dem dritten Farbparameter L* das bekannte normierte CIE-System. In diesem, durch die drei Farbparameter aufgespannten rechtwinkligen Koordinatensystem, gibt der Farbparameter L* wertmäßig die Lage auf der Hell-Dunkel-Achse an. Der Farbparameter a* gibt wertmäßig die Lage auf der Rot/Grün-Achse an. Der weitere Farbparameter b* gibt wertmäßig die Lage auf der Blau/Gelb-Achse an.

Durch eine derartige Ausgestaltung der Beschichtung im Hinblick auf die Anzahl und Art der Schichten, sowie im Hinblick auf die daraus resultierenden Werte für zwei spezifische Farbparameter wird eine deutlich höhere Variabilität bezüglich der Erzeugung eines optischen Gesamteindrucks der Kochfeldplatte ermöglicht.

Vorzugsweise ist die Beschichtung so ausgebildet, dass ein Transmissionsgrad der Kochfeldplatte im Wellenlängenbereich zwischen 380 nm und 780 nm <12%, insbesondere zwischen 0,5% und 10% ist.

Vorzugsweise ist vorgesehen, dass die Anzahl der metallischen Schichten 2 oder 3 beträgt.

Insbesondere ist vorgesehen, dass die Anzahl der dielektrischen Schichten zwischen 2 und 4 beträgt.

Es ist vorgesehen, dass die Beschichtung als unteren Abschluss eine Schutzschicht, insbesondere eine Antioxidations-Schutzschicht, aufweist.

Die Schichtenfolge ist insbesondere ausgehend von der Unterseite nach unten betrachtet zunächst beginnend mit einer dielektrischen Schicht, darauffolgend mit einer metallischen Schicht, darauffolgend wiederum mit einer dielektrischen Schicht und darauffolgend wiederum mit einer metallischen Schicht ausgebildet. Weitere dielektrische und metallische Schichten können folgen. Der nach unten hin untere Abschluss der Beschichtung wird dann durch die Schutzschicht gebildet.

Vorzugsweise ist vorgesehen, dass die metallischen Schichten und die dielektrischen Schichten jeweils Schichtdicken mit <=100 nm aufweisen.

Insbesondere ist vorgesehen, dass zumindest zwei metallische Schichten der Beschichtung unterschiedliche Schichtdicken und/oder zumindest zwei dielektrische Schichten der Beschichtung unterschiedliche Schichtdicken aufweisen. Dadurch kann eine äußerst große Palette an unterschiedlichen Farbgestaltungen auch sehr individuell und auch in Nuancen ermöglicht werden.

Vorzugsweise sind die Schichten der Beschichtung durch Sputtern auf der Unterseite ausgebildet, insbesondere durch ein Magnetronsputtern ausgebildet. Vorzugsweise ist vorgesehen, dass das Material eine metallische Schicht SSt ("Stainless Steel"; Edelstahl), Mo, Ni, Cr, Nd, V, Ti, Ta, Si, Al, Cu, W, oder eine Verbindung von zumindest zwei der genannten Elemente aufweist.

Bezüglich des Materials einer dielektrischen Schicht ist vorzugsweise vorgesehen, dass dieses SnO_{X}, ZnO_{X}, TiO_{X}, AlO_{X}, SiO_{X}, NbO_{X}, TaO_{X}, SiN_{X}, AlN_{X}, TlN_{X}, CrN_{X}, oder eine Verbindung von zumindest zwei der genannten Verbindungen aufweist.

Zu erwähnen ist, dass die Kochfeldplatte mit ihrer Grundplatte aus Glas oder Glaskeramik ausgebildet ist, an der dann die Beschichtung ausgebildet ist.

Bei einem bevorzugten Ausführungsbeispiel ist vorgesehen, dass die Beschichtung eine erste dielektrische Schicht mit SnO_{X} mit einer Schichtdicke von 76 nm aufweist. Die Beschichtung weist eine auf diese erste dielektrische Schicht folgende erste metallische Schicht mit SSt mit einer Schichtdicke von 18 nm auf. Auf diese erste metallische Schicht folgend wird dann wiederum eine zweite dielektrische Schicht mit SnO_{X} mit einer Schichtdicke von 68 nm ausgebildet. Auf diese folgend wird dann eine zweite metallische Schicht mit SSt mit einer Schichtdicke von 26 nm ausgebildet. Auf dieser zweiten metallischen Schicht ist eine dritte dielektrische Schicht mit SnO_{X} mit einer Schichtdicke von 50 nm ausgebildet. Insbesondere ist bei dieser Beschichtung der erste Farbparameter a* mit einem Wert 4, der zweiten Farbparameter b* mit einem Wert -35 und der dritte Farbparameter L* mit einem Wert 46 vorgesehen. Eine derartige Ausgestaltung einer Beschichtung vermittelt einen optischen Effekt dahingehend, dass die Kochfeldplatte als metallisch blau wirkend erscheint.

Bei einer weiteren Ausführung ist vorgesehen, dass die Beschichtung drei dielektrische Schichten mit SnO_{X} aufweist, die ausgehend von der Unterseite der Grundplatte nach unten gesehen Schichtdicken von 100 nm und nochmals 100 nm sowie 50 nm aufweist. Jeweils zwischen zwei derartigen dielektrischen Schichten ist eine metallische Schicht ausgebildet, die SSt aufweist. Die erste metallische Schicht weist eine Schichtdicke von 15 nm und die zweite metallische Schicht eine Schichtdicke von 35 nm auf. Die Farbparameter bei dieser Ausgestaltung sind dahingehend, dass der erste Farbparameter a* den Wert -31, der zweite Farbparameter b* den Wert 0 und der dritte Farbparameter L* den Wert 67 aufweist. Bei einer derartigen Ausgestaltung einer Beschichtung wird ein optischer Effekt dahingehend erzeugt, dass die Kochfeldplatte metallisch grün erscheint.

Bei einem weiteren Ausführungsbeispiel ist vorgesehen, dass die Beschichtung wiederum drei dielektrische Schichten mit SnO_{X} aufweist, wobei die erste dielektrische Schicht eine Schichtdicke von 17 nm, die zweite dielektrische Schicht eine Schichtdicke von 66 nm und die dritte dielektrische Schicht eine Schichtdicke von 50 nm aufweist. Auch hier sind zwischen den dielektrischen Schichten jeweils zumindest eine metallische Schicht ausgebildet, wobei die erste metallische Schicht Cu aufweist eine Schichtdicke von 33 nm aufweist. Die zweite metallische Schicht weist SSt auf und hat eine Schichtdicke von 25 nm. Darüber hinaus sind der Farbparameter dahingehend dass der erste Farbparameter a* den Wert -35 der zweite Farbparameter b* den Wert 5 und der dritte Farbparameter L* den Wert 60 aufweist. Bei einer derartigen Ausgestaltung der Beschichtung wird ein optischer Effekt dahingehend erzeugt, dass die Kochfeldplatte metallisch rot erscheint.

Bei einem weiteren Ausführungsbeispiel umfasst die Beschichtung wiederum drei dielektrische Schichten mit SnOₓ. Die erste dielektrische Schicht weist eine Schichtdicke von 29 nm, die zweite dielektrische Schicht eine Schichtdicke von 41 nm und die dritte dielektrische Schicht eine Schichtdicke von 50 nm auf. Auch hier sind zwischen den dielektrischen Schichten jeweils zumindest eine metallische Schicht ausgebildet, wobei die erste metallische Schicht SiAl aufweist und eine Schichtdicke von 45 nm umfasst. Die zweite metallische Schicht umfasst SSt und hat eine Schichtdicke von 22 nm. Die Farbparameter bei dieser Ausgestaltung sind dahingehend, dass der erste Farbparameter a* den Wert 9, der zweite Farbparameter b* den Wert -40 und der dritte Farbparameter L* den Wert 64 aufweist. Eine derartige Ausgestaltung ermöglicht einen optischen Effekt, der die Kochfeldplatte metallisch gelb erscheinen lässt.

Bei allen Ausführungen ist vorgesehen, dass als untere abschließende Schicht eine Antioxidations-Schutzschicht ausgebildet ist, die ebenfalls der Beschichtung zugeordnet ist.

Darüber hinaus kann vorgesehen sein, dass zusätzlich die Grundplatte der Kochfeldplatte bedruckt ist. Bedruckungen können dabei an der vorderen Stirnfläche oder an der Oberfläche der Grundplatte ausgebildet sein. Darüber hinaus können auch in der Grundplatte selbst Markierungen ausgebildet sein. Diese können beispielsweise mittels Laserlicht erzeugt sein. Mittels derartigen Bedruckungen können Schnittstellenbereiche bzw. Bedienfelder kenntlich gemacht werden. Darüber hinaus können auch Kochzonen entsprechend in ihren Umfangsbegrenzungen kenntlich gemacht werden. Bedruckungen können beispielsweise durch ein Siebdruckverfahren oder durch Lasermarkierung erfolgen. Mittels Laser können im Inneren der Grundplatte entsprechende Markierungen auch in unterschiedlichen Höhenniveaus ausgebildet werden. Weitere Möglichkeiten dazu sind in der DE 10 2006 017 250 A1 angegeben.

Eine nach unten hin ausgebildete Schutzschicht der Beschichtung kann auch durch einen Schutzüberzug erzeugt werden, der beispielsweise durch eine Farbe, Polymermaterial oder ein keramisches Material ausgebildet ist. Auch hier kann die Aufbringung durch eine Bedruckung oder ein Aufsprühen erfolgen. Derartige Bedruckungen werden vorzugsweise mit einer Dicke von einigen 100 µm ausgebildet.

Insbesondere durch die Aufbringung der Schichten der Beschichtung durch PVD (Physical Vapor Deposition) - Techniken wird ermöglicht, dass die Schichtdicken der einzelnen Schichten sehr genau erzeugt werden können und dadurch auch der visuelle optische Effekt bezüglich der Darstellung von Displayelementen, Leuchtmitteln, wie beispielsweise Lichtdioden, und Bilder, durch die Beschichtung erkannt werden können. Andererseits kann jedoch erreicht werden, dass darunter befindliche Mechanik und weitere gegenständliche Komponenten bei Blick auf die Kochfeldplatte von oben nicht erkannt werden können, wenn diese Kochfeldplatte in einem Kochfeld angeordnet ist.

Durch eine derartige Ausgestaltung einer Beschichtung der Kochfeldplatte mit gegebenenfalls zusätzlicher Bedruckung kann erreicht werden, dass auch ein Flächenbereich, durch den die Bedienvorrichtung auf der Kochfeldplatte kenntlich gemacht ist, in einem einheitlichen optischen Erscheinungsbild dargestellt ist. Vorzugsweise ist die gesamte Schichtdicke der Beschichtung unter der Unterseite zwischen 10 nm und 500 nm.

Durch die vorgeschlagene Ausgestaltung einer Beschichtung unter der Kochfeldplatte kann ein sehr weiter Bereich an farblichen metallischen Eindrücken einer Kochfeldplatte erzeugt werden, wobei unterschiedlichste Farbgebungen durch die der Modifikation der Anzahl der Schichten, der Materialien und der Schichtdicken mit den jeweiligen Farbparametern ausgebildet werden können.

Ausführungsbeispiele der Erfindung werden nachfolgend anhand schematischer Zeichnungen näher erläutert. Es zeigen:
- Fig. 1: eine schematische perspektivische Darstellung eines Ausführungsbeispiels eines erfindungsgemäßen Kochfelds;
- Fig. 2: eine Schnittdarstellung durch die Kochfeldplatte des Kochfelds gemäß Fig. 1;
- Fig. 3: ein Diagramm, bei dem der Transmissionsgrad und der Reflexionsgrad in Abhängigkeit von der Wellenlänge für ein erstes Ausführungsbeispiel einer erfindungsgemäßen Kochfeldplatte dargestellt ist;
- Fig. 4: ein Diagramm, bei dem der Transmissionsgrad und der Reflexionsgrad in Abhängigkeit von der Wellenlänge eines zweiten Ausführungsbeispiels einer erfindungsgemäßen Kochfeldplatte dargestellt sind;
- Fig. 5: ein Diagramm, bei dem der Transmissionsgrad und der Reflexionsgrad in Abhängigkeit von der Wellenlänge für ein drittes Ausführungsbeispiel einer erfindungsgemäßen Kochfeldplatte dargestellt sind; und
- Fig. 6: ein Diagramm, bei dem der Transmissionsgrad und der Reflexionsgrad in Abhängigkeit von der Wellenlänge für ein viertes Ausführungsbeispiel einer erfindungsgemäßen Kochfeldplatte dargestellt sind.

In den Figuren werden gleiche oder funktionsgleiche Elemente mit den gleichen Bezugszeichen versehen.

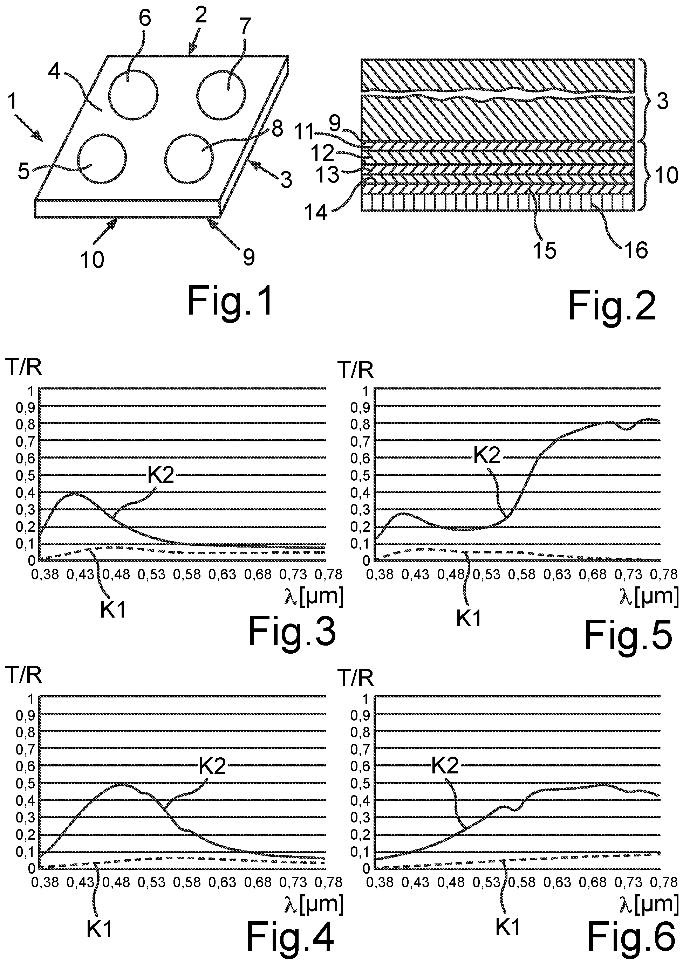

In Fig. 1 ist in einer schematischen und perspektivischen Ansicht ein Kochfeld 1 gezeigt, welches eine Kochfeldplatte 2 aufweist, die eine Grundplatte 3 aufweist, die aus Glas oder Glaskeramik ausgebildet ist. Auf einer Oberseite 4 der Grundplatte 3 sind in Anzahl und Position beispielhaft vier Kochzonen 5, 6, 7 und 8 gekennzeichnet. Auf einer Unterseite 9 der Grundplatte 3 ist eine in Fig. 1 nicht näher gezeigte Beschichtung 10 ausgebildet, die zumindest zwei metallische Schichten und zumindest zwei dielektrische Schichten sowie eine Antioxidations-Schutzschicht aufweist.

In Fig. 2 ist eine Schnittdarstellung durch die Kochfeldplatte 2 gemäß der Darstellung in Fig. 1 gezeigt. Die Dickenverhältnisse sind dabei nicht maßstabsgetreu und insbesondere ist die Grundplatte 3 wesentlich dicker als die gesamte Schichtdicke der Beschichtung 10. In der gezeigten Ausführung ist vorgesehen, dass die Beschichtung 10 eine direkt an die Unterseite 9 anschließende erste dielektrische Schicht 11 aufweist. Auf diese nach unten hin folgend ist eine erste metallische Schicht 12 ausgebildet. Auf diese wiederum nach unten folgend ist eine zweite dielektrische Schicht 13 ausgebildet. Auf diese wiederum folgend ist eine zweite metallische Schicht 14 ausgebildet. Nach unten hin ist dann eine dritte dielektrische Schicht 15 ausgebildet. Dieser Schichtverbund wird nach unten hin durch eine Schutzschicht, welche ein Antioxidations-Schutzschicht 16 ist, abgeschlossen.

Es kann auch vorgesehen sein, dass darüber hinaus weitere metallische Schichten und weitere dielektrische Schichten vorgesehen sind.

Bei einem ersten Ausführungsbeispiel ist vorgesehen, dass die erste dielektrische Schicht 11 eine Schichtdicke von 76 nm aufweist, und ein Material SnOₓ aufweist. Bei diesem Ausführungsbeispiel ist vorgesehen, dass dann die erste metallische Schicht 12 eine Schichtdicke von 18 nm aufweist und das Material SSt ist. Die zweite dielektrische Schicht 13 ist mit einer Schichtdicke von 78 nm ausgebildet und weist als Material SnOₓ auf.

Die zweite metallische Schicht 14 ist mit einer Schichtdicke von 26 nm ausgebildet und weist das Material SSt auf. Darauf folgend ist dann die dielektrische Schicht 15 mit einer Schichtdicke von 50 nm ausgebildet, wobei das Material wiederum SnOₓ ist. Bezüglich des Faktors x ist insbesondere die Zahl 2 vorgesehen, was auch für die bereits oben genannten anderen Ausführungsbeispiele zutrifft.

Der erste Farbparameter a* weist einen Wert 4, der zweite Farbparameter b* einen Wert - 35 und der dritte Farbparameter L* einen Wert 46 auf. Wie aus dem Diagramm gemäß Fig. 3 zu diesem Ausführungsbeispiel zu erkennen ist, ist der Transmissionsgrad der Kochfeldplatte 2 im Wellenlängenbereich zwischen 380 nm und 780 nm <10%. Der Reflexionsgrad hingegen ist im Wellenlängebereich zwischen 380 nm und etwa 430 nm von etwa 15% auf knapp unter 40% ansteigend, um dann wiederum kontinuierlich abzufallen und ab einer Wellenlänge von etwa 580 nm <10% zu sein.

Der Reflexionsgrad R ist dabei durch die Kurve K2 und der Transmissionsgrad T durch die Kurve K1 charakterisiert.

Bei einem weiteren Ausführungsbeispiel ist vorgesehen, dass die dielektrischen Schichten 11, 13 und 15 aus dem Material SnOₓ sind. Die Schichtdicke der ersten dielektrischen Schicht 11 beträgt 100 nm. Die Schichtdicke der zweiten dielektrischen Schicht 13 beträgt ebenfalls 100 nm. Die Schichtdicke der dritten dielektrischen Schicht 15 beträgt 50 nm. Bei diesem Ausführungsbeispiel sind die beiden metallischen Schichten 12 und 14 aus dem Material SSt, wobei die erste metallische Schicht 12 eine Schichtdicke von 14 nm und die zweite metallische Schicht 14 eine Schichtdicke von 35 nm aufweist. Bezüglich der Farbparameter ist bei dieser Ausgestaltung vorgesehen, dass der erste Farbparameter a* den Wert -31, der zweite Farbparameter b* den Wert 0 und der dritte Farbparameter L* den Wert 67 aufweisen. Bezüglich dieser Ausgestaltung ist das Diagramm gemäß Fig. 4 dargestellt. Auch hier ist der Transmissionsgrad T gemäß der Kurve K1 über den gesamten Wellenlängebereich zwischen 380 nm und 780 nm <10% insbesondere <7%. Der Reflexionsgrad R gemäß der Kurve K2 steigt auch hier wiederum von der Wellenlänge 380 nm bis etwa 500 nm von etwa 7% bis auf knapp unter 50% an, um auch dann wiederum kontinuierlich abzufallen. Insbesondere ab einer Wellenlänge von etwa 660 nm ist der Transmissionsgrad T kleiner 10%.

Bei einem weiteren dritten Ausführungsbeispiel ist vorgesehen, dass die dielektrischen Schichten 11, 13, und 15 wiederum aus dem Material SnOₓ sind. Die erste dielektrische Schicht 11 weist eine Schichtdicke von 17 nm, die zweite dielektrische Schicht 13 eine Schichtdicke von 66 nm und die dritte dielektrische Schicht 15 eine Schichtdicke von 50 nm auf.

Die dazwischen ausgebildeten beiden metallischen Schichten 12 und 14 sind dahingehend realisiert, dass die erste metallische Schicht 12 aus Cu und die zweite metallische Schicht 14 aus SSt ist. Die erste metallische Schicht 12 weist eine Schichtdicke von 33 nm auf. Wohingegen die zweite metallische Schicht 14 eine Schichtdicke von 25 nm aufweist. Bei dieser Ausgestaltung weist der erste Farbparameter a* einen Wert von -35 auf, der zweite Farbparameter b* den Wert 5 und der dritte Farbparameter L* den Wert 60 auf.

Zu dieser Ausgestaltung ist das Diagramm gemäß Fig. 5 gezeigt, wobei auch hier wiederum der Transmissionsgrad T gemäß der Kurve K1 über den gesamten Wellenlängenbereich unter 10% beträgt, insbesondere <8% beträgt. Bezüglich des Reflexionsgrades R zeigt die Kurve K2 einen Anstieg von der Wellenlänge 380 nm bis etwa 410 nm, um dann wiederum abzufallen und ab einer Wellenlänge von etwa 560 nm wieder anzusteigen.

In einem weiteren konkreten Ausführungsbeispiel ist vorgesehen, dass die drei dielektrischen Schichten 11, 13 und 15 wiederum aus dem Material SnOₓ sind. Die Schichtdicken betragen hierbei für die erste dielektrische Schicht 11 29 nm für die zweite dielektrische Schicht 13 41 nm und für die dritte dielektrische Schicht 15 50 nm. Die beiden metallischen Schichten 12 und 14 sind so konzipiert, dass die erste metallische Schicht 12 aus SiAl ausgebildet ist und eine Schichtdicke von 45 nm aufweist. Die zweite metallische Schicht 14 ist aus SSt ausgebildet und weist eine Schichtdicke von 22 nm auf. Bei dieser Ausgestaltung weist der erste Farbparameter a* den Wert 9, der zweite Farbparameter b* den Wert -40 und der dritte Farbparameter L* den Wert 64 auf. In Fig. 6 ist das zugehörige Diagramm gezeigt, wobei auch hier durch die Kurve K1 der Transmissionsgrad T und durch die Kurve K2 der Reflexionsgrad R im Verlauf über die Wellenlänge dargestellt sind. Auch hier ist der Transmissionsgrad T über den gesamten Wellenlängenbereich zwischen 380 nm und 780 nm <10%.

### Bezugszeichenliste

- 1: Kochfeld
- 2: Kochfeldplatte
- 3: Grundplatte
- 4: Oberseite
- 5, 6, 7, 8: Kochzonen
- 9: Unterseite
- 10: Beschichtung
- 11: erste dielektrische Schicht
- 12: erste metallische Schicht
- 13: zweite dielektrische Schicht
- 14: zweite metallische Schicht
- 15: dritte dielektrische Schicht
- 16: Antioxidations-Schutzschicht
- K1, K2: Kurven
- T: Transmissonsgrad
- R: Reflexionsgrad

## Patentansprüche

1. Kochfeldplatte (2) mit einer Grundplatte (3), an deren Unterseite (9) eine Beschichtung (10) mit zumindest zwei metallischen Schichten (12, 14) und zumindest zwei dielektrischen Schichten (11, 13, 15) ausgebildet ist, **dadurch gekennzeichnet, dass** die Beschichtung (10) so ausgebildet ist, dass ein erster Farbparameter a* oder ein zweiter Farbparameter b* der Kochfeldplatte (2) einen Wert größer +10 oder kleiner- 10 aufweist, und ein dritter Farbparameter L* einen Wert größer 40, insbesondere zwischen 40 und 70, aufweist.

2. Kochfeldplatte (2) nach Anspruch 1, **dadurch gekennzeichnet, dass** die Beschichtung (10) so ausgebildet ist, dass ein Transmissionsgrad (T) der Kochfeldplatte (2) im Wellenlängenbereich zwischen 380 nm und 780 nm kleiner 12%, insbesondere zwischen 0,5 % und 10% ist.

3. Kochfeldplatte (2) nach einem der vorhergehenden Ansprüche, **dadurch gekennzeichnet, dass** die Anzahl der metallischen Schichten (12, 14) 2 oder 3 beträgt.

4. Kochfeldplatte (2) nach einem der vorhergehenden Ansprüche, **dadurch gekennzeichnet, dass** Anzahl der dielektrischen Schichten (11, 13, 15) zwischen 2 und 4 beträgt.

5. Kochfeldplatte (2) nach einem der vorhergehenden Ansprüche, **dadurch gekennzeichnet, dass** die Beschichtung (10) als unteren Abschluss mit einer Schutzschicht, insbesondere eine Antioxidations-Schutzschicht (16), ausgebildet ist.

6. Kochfeldplatte (2) nach einem der vorhergehenden Ansprüche, **dadurch gekennzeichnet, dass** die metallischen Schichten (12, 14) und die dielektrischen Schichten (11, 13, 15) jeweils Schichtdicken kleiner oder gleich 300nm, bevorzugt kleiner oder gleich 100nm aufweisen.

7. Kochfeldplatte (2) nach Anspruch 6, **dadurch gekennzeichnet, dass** zumindest zwei metallische Schichten (12, 14) der Beschichtung (10) unterschiedliche Schichtdicken und/oder zumindest zwei dielektrische Schichten (11, 13, 15) der Beschichtung (10) unterschiedliche Schichtdicken aufweisen.

8. Kochfeldplatte (2) nach einem der vorhergehenden Ansprüche, **dadurch gekennzeichnet, dass** die Schichten der Beschichtung (10) durch Sputtern auf der Unterseite (9) ausgebildet sind, insbesondere durch ein Magnetronsputtern ausgebildet sind.

9. Kochfeldplatte (2) nach einem der vorhergehenden Ansprüche, **dadurch gekennzeichnet, dass** das Material einer metallischen Schicht (12, 14) SSt, Mo, Ni, Cr, Nb, V, Ti, Ta, Si, Al, Cu, W, oder einen Verbindung von zumindest zwei der genannten Elemente aufweist.

10. Kochfeldplatte (2) nach einem der vorhergehenden Ansprüche, **dadurch gekennzeichnet, dass** das Material einer dielektrischen Schicht (11, 13, 15) SnO_{X}, ZnO_{X}, TiO_{X}, AlO_{X}, SiO_{X}, NbO_{X}, TaO_{X}, SiN_{X}, AlN_{X}, TiN_{X}, CrNₓ, oder einen Verbindung von zumindest zwei der genannten Verbindungen aufweist.

11. Kochfeldplatte (2) nach einem der vorhergehenden Ansprüche, **dadurch gekennzeichnet, dass** die Beschichtung (10) eine erste dielektrische Schicht (11) mit SnOₓ mit einer Schichtdicke von 76nm aufweist, auf welche folgend eine zumindest erste metallische Schicht (12) mit SSt mit einer Schichtdicke von 18nm ausgebildet ist, auf welche folgend eine zweite dielektrische Schicht (13) mit SnOₓ mit einer Schichtdicke von 78nm ausgebildet ist, auf welche folgend zumindest eine zweite metallische Schicht (14) mit SSt mit einer Schichtdicke von 26nm ausgebildet ist, auf welche eine dritte dielektrische Schicht (15) mit SnOₓ mit einer Schichtdicke von 50 nm ausgebildet ist, wobei der erste Farbparameter a* den Wert 4, der zweite Farbparameter b* den Wert -35 und der dritte Farbparameter L* den Wert 46 aufweist.

12. Kochfeldplatte (2) nach einem der vorhergehenden Ansprüche 1 bis 10, **dadurch gekennzeichnet, dass** die Beschichtung (10) eine erste dielektrische Schicht (11) mit SnOₓ mit einer Schichtdicke von 100nm aufweist, auf welche folgend zumindest eine erste metallische Schicht (12) mit SSt mit einer Schichtdicke von 14nm ausgebildet ist, auf welche folgend eine zweite dielektrische Schicht (13) mit SnOₓ mit einer Schichtdicke von 100nm ausgebildet ist, auf welche folgend zumindest eine zweite metallische Schicht (14) mit SSt mit einer Schichtdicke von 35nm ausgebildet ist, auf welche eine dritte dielektrische Schicht (15) mit SnO_{X} mit einer Schichtdicke von 50nm ausgebildet ist, wobei der erste Farbparameter a* den Wert -31, der zweite Farbparameter b* den Wert 0 und der dritte Farbparameter L* den Wert 67 aufweist.

13. Kochfeldplatte (2) nach einem der vorhergehenden Ansprüche 1 bis 10, **dadurch gekennzeichnet, dass** die Beschichtung (10) eine erste dielektrische Schicht (11) mit SnOₓ mit einer Schichtdicke von 17nm aufweist, auf welche folgend zumindest eine erste metallische Schicht (12) mit Cu mit einer Schichtdicke von 33nm ausgebildet ist, auf welche folgend eine zweite dielektrische Schicht (13) mit SnOₓ mit einer Schichtdicke von 66nm ausgebildet ist, auf welche folgend zumindest eine zweite metallische Schicht (14) mit SSt mit einer Schichtdicke von 25nm ausgebildet ist, auf welche eine dritte dielektrische Schicht (15) mit SnOₓ mit einer Schichtdicke von 50nm ausgebildet ist, wobei der erste Farbparameter a* den Wert -35, der zweite Farbparameter b* den Wert 5 und der dritte Farbparameter L* den Wert 60 aufweist.

14. Kochfeldplatte (2) nach einem der vorhergehenden Ansprüche 1 bis 10, **dadurch gekennzeichnet, dass** die Beschichtung (10) eine erste dielektrische Schicht (11) mit SnOₓ mit einer Schichtdicke von 29nm aufweist, auf welche folgend zumindest eine erste metallische Schicht (12) mit SiAl mit einer Schichtdicke von 45nm ausgebildet ist, auf welche folgend eine zweite dielektrische Schicht (13) mit SnOₓ mit einer Schichtdicke von 41 nm ausgebildet ist, auf weiche folgend zumindest eine zweite metallische Schicht (14) mit SSt mit einer Schichtdicke von 22nm ausgebildet ist, auf welche eine dritte dielektrische Schicht (15) mit SnO_{X} mit einer Schichtdicke von 50nm ausgebildet ist, wobei der erste Farbparameter a* den Wert 9, der zweite Farbparameter b* den Wert -40 und der dritte Farbparameter L* den Wert 64 aufweist.

## Claims

1. Cooktop plate (2) having a base plate (3), on the lower side (9) of which a coating (10) is configured with at least two metal layers (12, 14) and at least two dielectric layers (11, 13, 15), **characterised in that** the coating (10) is configured in such a manner that a first colour parameter a* or a second colour parameter b* of the cooktop plate (2) has a value greater than +10 or smaller than -10, and a third colour parameter L* has a value greater than 40, in particular between 40 and 70.

2. Cooktop plate (2) according to claim 1, **characterised in that** the coating (10) is configured such that a degree of transmission (T) of the cooktop plate (2) in the wavelength range between 380 nm and 780 nm is less than 12%, in particular between 0.5% and 10%.

3. Cooktop plate (2) according to one of the preceding claims, **characterised in that** the number of metal layers (12, 14) is 2 or 3.

4. Cooktop plate (2) according to one of the preceding claims, **characterised in that** the number of dielectric layers (11, 13, 15) is between 2 and 4.

5. Cooktop plate (2) according to one of the preceding claims, **characterised in that** the coating (10) is configured with a protective layer, in particular a protective antioxidation layer (16), as the lower termination.

6. Cooktop plate (2) according to one of the preceding claims, **characterised in that** the metal layers (12, 14) and the dielectric layers (11, 13, 15) respectively have layer thicknesses less than or equal to 300 nm, preferably less than or equal to 100 nm.

7. Cooktop plate (2) according to claim 6, **characterised in that** at least two metal layers (12, 14) of the coating (10) have different layer thicknesses and/or at least two dielectric layers (11, 13, 15) of the coating (10) have different layer thicknesses.

8. Cooktop plate (2) according to one of the preceding claims, **characterised in that** the layers of the coating (10) are configured by sputtering on the lower side (9), in particular by magnetron sputtering.

9. Cooktop plate (2) according to one of the preceding claims, **characterised in that** the material of a metal layer (12, 14) comprises SSt, Mo, Ni, Cr, Nb, V, Ti, Ta, Si, Al, Cu, W or a combination of at least two of the cited elements.

10. Cooktop plate (2) according to one of the preceding claims, **characterised in that** the material of a dielectric layer (11, 13, 15) comprises SnO**ₓ**, ZnOₓ, TiOₓ, AlOₓ, SiOₓ, NbOₓ, TaOₓ, SiNₓ, AlNₓ, TiNₓ, CrNₓ or a combination of at least two of the cited compounds.

11. Cooktop plate (2) according to one of the preceding claims, **characterised in that** the coating (10) has a first dielectric layer (11) with SnOₓ with a layer thickness of 76 nm, following which an at least first metal layer (12) is configured with SSt with a layer thickness of 18 nm, following which a second dielectric layer (13) is configured with SnOₓ with a layer thickness of 78 nm, following which at least one second metal layer (14) is configured with SSt with a layer thickness of 26 nm, on which a third dielectric layer (15) is configured with SnOₓ with a layer thickness of 50 nm, wherein the first colour parameter a* has the value 4, the second colour parameter b* the value -35 and the third colour parameter L* the value 46.

12. Cooktop plate (2) according to one of the preceding claims 1 to 10, **characterised in that** the coating (10) has a first dielectric layer (11) with SnOₓ with a layer thickness of 100 nm, following which at least one first metal layer (12) is configured with SSt with a layer thickness of 14 nm, following which a second dielectric layer (13) is configured with SnOₓ with a layer thickness of 100 nm, following which at least one second metal layer (14) is configured with SSt with a layer thickness of 35 nm, on which a third dielectric layer (15) is configured with SnOₓ with a layer thickness of 50 nm, wherein the first colour parameter a* has the value -31, the second colour parameter b* the value 0 and the third colour parameter L* the value 67.

13. Cooktop plate (2) according to one of the preceding claims 1 to 10, **characterised in that** the coating (10) has a first dielectric layer (11) with SnOₓ with a layer thickness of 17 nm, following which at least one first metal layer (12) is configured with Cu with a layer thickness of 33 nm, following which a second dielectric layer (13) is configured with SnOₓ with a layer thickness of 66 nm, following which at least one second metal layer (14) is configured with SSt with a layer thickness of 25 nm, on which a third dielectric layer (15) is configured with SnOₓ with a layer thickness of 50 nm, wherein the first colour parameter a* has the value -35, the second colour parameter b* the value 5 and the third colour parameter L* the value 60.

14. Cooktop plate (2) according to one of the preceding claims 1 to 10, **characterised in that** the coating (10) has a first dielectric layer (11) with SnOₓ with a layer thickness of 29 nm, following which at least one first metal layer (12) is configured with SiAl with a layer thickness of 45 nm, following which a second dielectric layer (13) is configured with SnOₓ with a layer thickness of 41 nm, following which at least one second metal layer (14) is configured with SSt with a layer thickness of 22 nm, on which a third dielectric layer (15) is configured with SnOₓ with a layer thickness of 50 nm, wherein the first colour parameter a* has the value 9, the second colour parameter b* the value -40 and the third colour parameter L* the value 64.

## Revendications

1. Table de cuisson (2) comprenant une plaque de base (3) sur le côté inférieur (9) de laquelle un revêtement (10) est réalisé avec au moins deux couches métalliques (12, 14) et au moins deux couches diélectriques (11, 13, 15), **caractérisée en ce que** le revêtement (10) est réalisé de manière à ce qu'un premier paramètre de couleur a* ou un deuxième paramètre de couleur b* de la table de cuisson (2) présente une valeur supérieure à +10 ou inférieure à -10, et qu'un troisième paramètre de couleur L* présente une valeur supérieure à 40, notamment entre 40 et 70.

2. Table de cuisson (2) selon la revendication 1, **caractérisée en ce que** le revêtement (10) est réalisé de manière à ce qu'un degré de transmission (T) de la table de cuisson (2), dans la plage de longueur d'onde comprise entre 380 nm et 780 nm, soit inférieur à 12%, notamment **en ce qu'**il soit compris entre 0,5% et 10%.

3. Table de cuisson (2) selon l'une quelconque des revendications précédentes, **caractérisée en ce que** le nombre de couches métalliques (12, 14) est 2 ou 3.

4. Table de cuisson (2) selon l'une quelconque des revendications précédentes, **caractérisée en ce que** le nombre de couches diélectriques (11, 13, 15) est compris entre 2 et 4.

5. Table de cuisson (2) selon l'une quelconque des revendications précédentes, **caractérisée en ce que** le revêtement (10) est réalisé en tant que terminaison inférieure munie d'une couche de protection, notamment une couche de protection à antioxydation (16).

6. Table de cuisson (2) selon l'une quelconque des revendications précédentes, **caractérisée en ce que** les couches métalliques (12, 14) et les couches diélectriques (11, 13, 15) présentent respectivement des épaisseurs de couche inférieures ou égales à 300 nm, de préférence inférieures ou égales à 100 nm.

7. Table de cuisson (2) selon la revendication 6, **caractérisée en ce qu'**au moins deux couches métalliques (12, 14) du revêtement (10) présentent différentes épaisseurs de couches et/ou **en ce qu'**au moins deux couches diélectriques (11, 13, 15) du revêtement (10) présentent différentes épaisseurs de couche.

8. Table de cuisson (2) selon l'une quelconque des revendications précédentes, **caractérisée en ce que** les couches du revêtement (10) sont réalisées par pulvérisation sur le côté inférieur (9), notamment par une pulvérisation magnétron.

9. Table de cuisson (2) selon l'une quelconque des revendications précédentes, **caractérisée en ce que** la matière d'une couche métallique (12, 14) présente SSt, Mo, Ni, Cr, Nb, V, Ti, Ta, Si, Al, Cu, W ou une composition d'au moins deux des éléments mentionnés.

10. Table de cuisson (2) selon l'une quelconque des revendications précédentes, **caractérisée en ce que** la matière d'une couche diélectrique (11, 13, 15) présente SnOₓ, ZnOₓ, TiOₓ, AIOₓ, SiOₓ, NbOₓ, TaOₓ, SiNₓ, AlNₓ, TiNₓ, CrNₓ ou une composition d'au moins deux des compositions mentionnées.

11. Table de cuisson (2) selon l'une quelconque des revendications précédentes, **caractérisée en ce que** le revêtement (10) présente une première couche diélectrique (11) avec SnOₓ ayant une épaisseur de couche de 76 nm, sur laquelle est réalisée en suivant au moins une première couche métallique (12) avec SSt ayant une épaisseur de couche de 18 nm, sur laquelle est réalisée en suivant une deuxième couche diélectrique (13) avec SnOₓ ayant une épaisseur de couche de 78 nm, sur laquelle est réalisée en suivant au moins une deuxième couche métallique (14) avec SSt ayant une épaisseur de couche de 26 nm, sur laquelle est réalisée une troisième couche diélectrique (15) avec SnOₓ ayant une épaisseur de couche de 50 nm, le premier paramètre de couleur a* présentant la valeur 4, le deuxième paramètre de couleur b* la valeur -35 et le troisième paramètre de couleur L* la valeur 46.

12. Table de cuisson (2) selon l'une quelconque des revendications 1 à 10, **caractérisé en ce que** le revêtement (10) présente une première couche diélectrique (11) avec SnOₓ ayant une épaisseur de couche de 100 nm, sur laquelle est réalisée en suivant au moins une première couche métallique (12) avec SSt ayant une épaisseur de couche de 14 nm, sur laquelle est réalisée en suivant une deuxième couche diélectrique (13) avec SnOₓ ayant une épaisseur de couche de 100 nm, sur laquelle est réalisée en suivant au moins une deuxième couche métallique (14) avec SSt ayant une épaisseur de couche de 35 nm, sur laquelle est réalisée une troisième couche diélectrique (15) avec SnOₓ ayant une épaisseur de couche de 50 nm, le premier paramètre de couleur a* présentant la valeur -31, le deuxième paramètre de couleur b* la valeur 0 et le troisième paramètre de couleur L* la valeur 67.

13. Table de cuisson (2) selon l'une quelconque des revendications 1 à 10, **caractérisé en ce que** le revêtement (10) présente une première couche diélectrique (11) avec SnOₓ ayant une épaisseur de couche de 17 nm, sur laquelle est réalisée en suivant au moins une première couche métallique (12) avec Cu ayant une épaisseur de couche de 33 nm, sur laquelle est réalisée en suivant une deuxième couche diélectrique (13) avec SnOₓ ayant une épaisseur de couche de 66 nm, sur laquelle est réalisée en suivant au moins une deuxième couche métallique (14) avec SSt ayant une épaisseur de couche de 25 nm, sur laquelle est réalisée une troisième couche diélectrique (15) avec SnOₓ ayant une épaisseur de couche de 50 nm, le premier paramètre de couleur a* présentant la valeur -35, le deuxième paramètre de couleur b* la valeur 5 et le troisième paramètre de couleur L* la valeur 60.

14. Table de cuisson (2) selon l'une quelconque des revendications 1 à 10, **caractérisé en ce que** le revêtement (10) présente une première couche diélectrique (11) avec SnOₓ ayant une épaisseur de couche de 29 nm, sur laquelle est réalisée en suivant au moins une première couche métallique (12) avec SiAl ayant une épaisseur de couche de 45 nm, sur laquelle est réalisée en suivant une deuxième couche diélectrique (13) avec SnOₓ ayant une épaisseur de couche de 41 nm, sur laquelle est réalisée en suivant au moins une deuxième couche métallique (14) avec SSt ayant une épaisseur de couche de 22 nm, sur laquelle est réalisée une troisième couche diélectrique (15) avec SnOₓ ayant une épaisseur de couche de 50 nm, le premier paramètre de couleur a* présentant la valeur 9, le deuxième paramètre de couleur b* la valeur -40 et le troisième paramètre de couleur L* la valeur 64.
